# EUROPÄISCHE PATENTSCHRIFT

(11) **EP 3 317 161 B1**
(45) Veröffentlichungstag und Bekanntmachung des Hinweises auf die Patenterteilung: **19.02.2020**
(21) Anmeldenummer: 16733433.3
(22) Anmeldetag: 27.06.2016
(51) Int. Cl.: B62D 1/20, B62D 1/16, F16D 3/06, B62D 1/185, F16C 3/035, F16C 29/04, F16C 29/12

(54) **LENKZWISCHENWELLE FÜR EIN KRAFTFAHRZEUG**
INTERMEDIARY STEERING SHAFT FOR A VEHICLE
ARBRE INTERMÉDIAIRE POUR VÉHICULE

(30) Priorität: 30.06.2015 DE 102015110457
(43) Veröffentlichungstag der Anmeldung: 09.05.2018
(73) Patentinhaber: Robert Bosch Automotive Steering GmbH, 73527 Schwäbisch Gmünd (DE)
(72) Erfinder: ABONYI, Olivér, 3300 Eger (HU)
(74) Vertreter: Bee, Joachim
(86) Internationale Anmeldenummer: PCT/EP2016/064773
(87) Internationale Veröffentlichungsnummer: WO 2017/001308

(56) Entgegenhaltungen:
- EP-A1- 1 512 607
- EP-A1- 1 566 324
- GB-A- 2 395 995

## Beschreibung

Die Erfindung betrifft eine Lenkzwischenwelle für ein Kraftfahrzeug.

### Stand der Technik

Lenkzwischenwellen sind in der Regel derart konzipiert, dass diese verlängerbar und/oder verkürzbar ausgebildet sind. Damit soll erreicht werden, dass bei einem Fahrbetrieb des Kraftfahrzeuges auftretende Relativbewegungen zwischen Fahrerkabine und Fahrzeugchassis ohne Beeinträchtigung auf das Lenkverhalten bleiben.

Die US 2011/0098121 A1 offenbart eine Vorrichtung zum Koppeln einer inneren Welle und einer äußeren Welle, welche in Richtung einer gemeinsamen Achse verschiebbar sind. Zwischen den beiden Wellen sind Kugeln vorgesehen. Die Kugeln sind in axialen Nuten der inneren Welle sowie in axialen Nuten der äußeren Welle angeordnet. Jede Reihe von Kugeln wird durch ein in der Nut der Innenwelle angeordnetes doppeltes elastisches Element in Position gehalten, welches eine Rollenbahn derart mit einer Federkraft beaufschlagt, dass die jeweiligen Kugeln zwischen der Rollenbahn und der in der äußeren Welle ausgebildeten axialen Nut gehalten werden. GB 2 395 995 A offenbart eine Vorrichtung nach den Merkmalen des Oberbegriffs des Anspruchs 1.

Durch das Erfordernis der Federkraftbeaufschlagung der Rollenbahn zum Positionieren bzw. Halten der Kugeln zwischen der Rollenbahn und der in der äußeren Welle ausgebildeten Axialnut mit einem relativ großen Federweg kommt es zu einem relativ großen Spiel der Kugeln in der Rollenbahn. Des Weiteren ist vorstehend genannte Vorrichtung nicht für einen Einsatz im Bereich von Lastkraftfahrzeugen und der damit verbundenen Materialbeanspruchung geeignet.

Der Erfindung liegt somit die Aufgabe zugrunde, eine Lenkzwischenwelle für ein Kraftfahrzeug anzubieten, welche kostengünstig herstellbar ist, eine hohe Haltbarkeit aufweist und einen effektiven Spielausgleich der relativ zueinander verschiebbaren Komponenten der Lenkzwischenwelle ermöglicht.

Die Aufgabe wird mit einer Lenkzwischenwelle für ein Kraftfahrzeug mit den Merkmalen des Patentanspruchs 1 gelöst.

### Offenbarung der Erfindung

Eine Idee der vorliegenden Erfindung ist es, eine Lenkzwischenwelle für ein Kraftfahrzeug dahingehend zu verbessern, dass der Spielausgleich durch Zusammenwirken der jeweiligen Führungsschiene mit dem elastischen Element einen kontinuierlichen Spielausgleich zwischen der äußeren Hohlwelle und der mit der inneren Hohlwelle verbundenen Profilwelle ermöglicht. Durch die Beaufschlagung der Führungsanordnung mit einer Vorspannung durch das elastische Element kann ein kontinuierlicher Spielausgleich zwischen der äußeren Hohlwelle und der Profilwelle stattfinden. Die erfindungsgemäße Lenkzwischenwelle erfordert überdies keine gesonderte Spieleinstellung bei der Montage. Eine derartige Anordnung erfüllt zudem die Anforderungen an eine Haltbarkeit der Lenkzwischenwelle für eine Verwendung im Bereich von Nutzfahrzeugen.

Weitere Vorteile sind eine durch das Vorsehen des elastischen Elementes zwischen der jeweiligen Führungsschiene und dem Aufnahmeabschnitt der Profilwelle verbesserte Vibrationsdämpfung der Lenkzwischenwelle. Des Weiteren weist die Lenkzwischenwelle aufgrund eines gegenüber bekannten Anwendungen erhöhten Durchmessers der Profilwelle eine höhere Stabilität der Führungsschienen innerhalb eines gleichen Spielausgleichsbereiches auf. Überdies weist die Lenkzwischenwelle eine in vorteilhafter Weise reduzierte Reibung bei der axialen Verstellung der inneren Hohlwelle relativ zu der äußeren Hohlwelle auf.

Vorteilhafte Ausführungsformen und Weiterbildungen ergeben sich aus den Unteransprüchen sowie aus der Beschreibung unter Bezugnahme auf die Figuren.

Gemäß einer bevorzugten Weiterbildung ist vorgesehen, dass der Aufnahmeabschnitt der Profilwelle, die erste Führungsschiene und die zweite Führungsschiene derart bogenförmig ausgebildet sind, dass eine Bogenform der ersten Führungsschiene und der zweiten Führungsschiene im Wesentlichen an eine Bogenform des Aufnahmeabschnitts der Profilwelle angepasst ist. Somit ist in vorteilhafter Weise eine widerstandsarme Gleitbewegung der jeweiligen ersten und zweiten Führungsschiene entlang dem Aufnahmeabschnitt der Profilwelle möglich.

Gemäß einer weiteren bevorzugten Weiterbildung ist vorgesehen, dass eine dem Aufnahmeabschnitt der Profilwelle gegenüberliegend angeordnete Oberfläche der ersten Führungsschiene benachbart zu der in der ersten Führungsschiene ausgebildeten Aussparung zur Aufnahme des elastischen Elementes zumindest abschnittsweise eine Krümmung aufweist, welche größer als eine Krümmung einer Oberfläche des Aufnahmeabschnitts der Profilwelle ist und eine dem Aufnahmeabschnitt der Profilwelle gegenüberliegend angeordnete Oberfläche der zweiten Führungsschiene benachbart zu der in der zweiten Führungsschiene ausgebildeten Aussparung zur Aufnahme des elastischen Elementes zumindest abschnittsweise eine Krümmung aufweist, welche größer als eine Krümmung der Oberfläche des Aufnahmeabschnitts der Profilwelle ist.

Somit wird die Oberfläche des Aufnahmeabschnitts der Profilwelle durch die jeweils erste und zweite Führungsschiene in vorteilhafter Weise lediglich in den Bereichen der ersten und zweiten Führungsschiene kontaktiert, in welchen die erste und zweite Führungsschiene eine größere Krümmung als die Krümmung der Oberfläche des Aufnahmeabschnitts der Profilwelle aufweist. Dadurch kann ein Reibungskoeffizient der Oberflächenreibung zwischen der jeweiligen Führungsschiene und dem Aufnahmeabschnitt der Profilwelle in vorteilhafter Weise reduziert werden.

Gemäß einer weiteren bevorzugten Weiterbildung ist vorgesehen, dass die erste Führungsschiene und die zweite Führungsschiene um die Oberfläche des Aufnahmeabschnitts der Profilwelle drehbar gelagert sind. Bei einer Drehmomentübertragung von der äußeren Hohlwelle mittels der Führungsanordnung auf die Profilwelle kann aufgrund der drehbaren Lagerung der ersten und zweiten Führungsschiene um die Oberfläche des Aufnahmeabschnitts der Profilwelle somit ein effektiver Spielausgleich zwischen der Führungsanordnung und der äußeren Hohlwelle bereitgestellt werden.

Gemäß einer weiteren bevorzugten Weiterbildung ist vorgesehen, dass die erste Führungsschiene in Relation zu dem Aufnahmeabschnitt der Profilwelle derart angeordnet ist, dass die in der ersten Führungsschiene ausgebildete Aussparung zur Aufnahme des elastischen Elementes zu der in dem Aufnahmeabschnitt der Profilwelle ausgebildeten ersten Aussparung zur Aufnahme des elastischen Elementes in einem vorbestimmten Abstand zueinander versetzt angeordnet sind, und die zweite Führungsschiene in Relation zu dem offenen Abschnitt der Profilwelle derart angeordnet ist, dass die in der zweiten Führungsschiene ausgebildete Aussparung zur Aufnahme des elastischen Elementes zu der in dem Aufnahmeabschnitt der Profilwelle ausgebildeten zweiten Aussparung zur Aufnahme des elastischen Elementes in einem vorbestimmten Abstand zueinander versetzt angeordnet sind.

Aufgrund der versetzten Anordnung der ersten und zweiten Aussparung des offenen Abschnitts der Profilwelle gegenüber den jeweiligen Aussparungen der ersten und zweiten Führungsschiene wird das in dem jeweiligen Hohlraum, welcher durch die jeweilige Aussparung des Aufnahmeabschnitts der Profilwelle und die Aussparung der Führungsschiene gebildet wird, eingefügte elastische Element mit einer Scherkraft beaufschlagt. Das gescherte elastische Element beaufschlagt die Führungsanordnung, insbesondere die Führungsschienen sowie die an den Führungsschienen anliegende Mehrzahl von Kugeln, somit mit einer Vorspannung.

Gemäß der Erfindung ist vorgesehen, dass das elastische Element zum Spielausgleich der Führungsanordnung in Breitenrichtung scherbar ist und das elastische Element als Gummi- oder Kunststoffprofil ausgebildet ist. Aufgrund der Scherbarkeit in Verbindung mit der Ausbildung des elastischen Elementes aus einem flexiblen Material ist das elastische Element dazu ausgebildet, die Führungsanordnung mit einer Vorspannung zu beaufschlagen. Darüber hinaus kann das elastische Element in einfacher Art und Weise in den Aufnahmeabschnitt der Profilwelle eingelegt werden, wodurch eine Montage der Lenkzwischenwelle vereinfacht wird.

Gemäß einer weiteren bevorzugten Weiterbildung ist vorgesehen, dass die Mehrzahl von Kugeln in einem Kugelkäfig angeordnet sind, welcher eine Mehrzahl von im Wesentlichen hohlzylindrisch ausgebildeten Aufnahmeeinrichtungen zur Aufnahme der Kugeln aufweist, wobei eine Aufnahmeeinrichtung jeweils zwei in Axialrichtung der Aufnahmeeinrichtung voneinander beabstandet angeordnete halbzylindrische Aufnahmeelemente aufweist, welche in einem Einfügebereich zum Einfügen der Kugeln abgeschrägt sind.

Durch Vorsehen des Kugelkäfigs zur Aufnahme der Kugeln kann in vorteilhafter Weise ein durch Berührungskontakt der Kugeln resultierender Bremseffekt bei dem axialen Verschieben der inneren Hohlwelle relativ zu der äußeren Hohlwelle verhindert werden.

Gemäß einer weiteren bevorzugten Weiterbildung ist vorgesehen, dass die halbzylindrischen Aufnahmeelemente derart in Axialrichtung voneinander beabstandet sind, dass ein Abstand zwischen jeweils zwei Aufnahmeelementen der Aufnahmeeinrichtung in dem Einfügebereich zum Einfügen der Kugeln geringer als ein Durchmesser einer jeweiligen Kugel ausgebildet ist. Dadurch kann in vorteilhafter Weise erreicht werden, dass die Aufnahmeelemente die jeweiligen Kugeln nach Einfügen der Kugeln umschließen.

Gemäß einer weiteren bevorzugten Weiterbildung ist vorgesehen, dass die Mehrzahl von im Wesentlichen hohlzylindrisch ausgebildeten Aufnahmeeinrichtungen an einem Bodenabschnitt des Kugelkäfigs durch eine in Axialrichtung des Kugelkäfigs ausgebildete Leiste verbunden sind, wobei die Aufnahmeelemente relativ zu der am Bodenabschnitt des Kugelkäfigs ausgebildeten Leiste in Axialrichtung des Kugelkäfigs biegbar sind. Somit können die Kugeln in die Aufnahmeelemente des Kugelkäfigs eingefügt werden, obwohl die Aufnahmeeinrichtungen in dem Einfügebereich zum Einfügen der Kugeln einen geringeren Durchmesser als ein Durchmesser der jeweiligen Kugel aufweisen. Nach Einfügen der Kugeln in die Aufnahmeeinrichtungen durch Biegen der Aufnahmeelemente in Axialrichtung des Kugelkäfigs schnappen die Aufnahmeelemente wieder in ihre Ursprungsposition und verhindern somit in vorteilhafter Weise ein Entfernen der Kugeln aus dem Kugelkäfig.

Gemäß einer weiteren bevorzugten Weiterbildung ist vorgesehen, dass ein axialer Endanschlag des Kugelkäfigs durch an axialen Endabschnitten des Kugelkäfigs auf der Profilwelle angeordneten Begrenzungsringen ausgebildet ist, wobei Begrenzungsringe jeweils durch einen Sicherungsring an der Profilwelle fixiert sind. Somit kann der Kugelkäfig in vorteilhafter Weise in einem vorbestimmten Bereich angeordnet und in Axialrichtung der Profilwelle gesichert werden.

Gemäß einer weiteren bevorzugten Weiterbildung ist vorgesehen, dass die innere Hohlwelle und die Profilwelle in einem Überlappungsbereich jeweils benachbart zueinander angeordnete, in Umfangsrichtung konkav ausgebildete Abschnitte aufweisen, wobei der konkav ausgebildete Abschnitt der inneren Hohlwelle mit dem konkav ausgebildeten Abschnitt der Profilwelle zum axialen Befestigen der Profilwelle an der inneren Hohlwelle in Eingriff ist. Somit kann die Profilwelle nach einem Einfügen in die innere Hohlwelle in vorteilhafter Weise durch Einbringen der in Umfangsrichtung ausgebildeten konkaven Abschnitte der Profilwelle und der inneren Hohlwelle mittels beispielsweise Einpressen in Axialrichtung fixiert werden.

Gemäß einer weiteren bevorzugten Weiterbildung ist vorgesehen, dass die erste Führungsschiene und die zweite Führungsschiene um eine Oberfläche des Aufnahmeabschnitts der Profilwelle drehbar gelagert wird. Bei einer Drehmomentübertragung von der äußeren Hohlwelle mittels der Führungsanordnung auf die Profilwelle kann aufgrund der drehbaren Lagerung der ersten und zweiten Führungsschiene um die Oberfläche des Aufnahmeabschnitts der Profilwelle somit ein effektiver Spielausgleich zwischen der Führungsanordnung und der äußeren Hohlwelle bereitgestellt werden.

Gemäß der Erfindung ist vorgesehen, dass das elastische Element zum Spielausgleich der Führungsanordnung in Breitenrichtung geschert wird. Aufgrund der Scherbarkeit in Verbindung mit der Ausbildung des elastischen Elementes aus einem flexiblen Material ist das elastische Element dazu ausgebildet, die Führungsanordnung mit einer Vorspannung zu beaufschlagen.

Gemäß einer weiteren bevorzugten Weiterbildung ist vorgesehen, dass ein Kugelkäfig zur Aufnahme der Mehrzahl von Kugeln bereitgestellt wird, wobei der Kugelkäfig derart ausgebildet ist, dass bei einem Einfügen der Kugeln in voneinander in Axialrichtung beabstandete, halbzylindrische Aufnahmeelemente einer Mehrzahl von im Wesentlichen hohlzylindrisch ausgebildeten Aufnahmeeinrichtungen jeweilige Aufnahmeelemente, deren Abstand in einem Einfügebereich der Kugeln geringer als ein Durchmesser einer jeweiligen Kugel ausgebildet ist, in Axialrichtung des Kugelkäfigs gebogen werden.

Durch Vorsehen der Aufnahmeelemente, deren Abstand in einem Einfügebereich der Kugeln geringer als ein Durchmesser einer jeweiligen Kugel ausgebildet ist, kann in vorteilhafter Weise erreicht werden, dass die Aufnahmeelemente die jeweiligen Kugeln nach Einfügen der Kugeln umschließen. Somit können die Kugeln in die Aufnahmeelemente des Kugelkäfigs eingefügt werden, obwohl die Aufnahmeeinrichtungen in dem Einfügebereich zum Einfügen der Kugeln einen geringeren Durchmesser als ein Durchmesser der jeweiligen Kugel aufweisen. Nach Einfügen der Kugeln in die Aufnahmeeinrichtungen durch Biegen der Aufnahmeelemente in Axialrichtung des Kugelkäfigs schnappen die Aufnahmeelemente wieder in ihre Ursprungsposition und verhindern somit in vorteilhafter Weise ein Entfernen der Kugeln aus dem Kugelkäfig.

Gemäß einer weiteren bevorzugten Weiterbildung ist vorgesehen, dass die Profilwelle an der inneren Hohlwelle durch Einbringen von, in Umfangsrichtung konkav ausgebildeten Abschnitten in die Profilwelle und in die innere Hohlwelle in einem Überlappungsbereich der Profilwelle und der inneren Hohlwelle, wobei der konkav ausgebildete Abschnitt der inneren Hohlwelle mit dem konkav ausgebildeten Abschnitt der Profilwelle in Eingriff ist, befestigt wird. Somit kann die Profilwelle nach einem Einfügen in die innere Hohlwelle in vorteilhafter Weise durch Einbringen der in Umfangsrichtung ausgebildeten konkaven Abschnitte der Profilwelle und der inneren Hohlwelle mittels beispielsweise Einpressen in Axialrichtung fixiert werden.

Die beschriebenen Ausgestaltungen und Weiterbildungen lassen sich beliebig miteinander kombinieren.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: eine schematische Darstellung einer Lenkzwischenwelle für ein Kraftfahrzeug gemäß einer bevorzugten Ausführungsform der Erfindung;
- Fig. 2: eine Längsschnittansicht eines in Fig. 1 gekennzeichneten Teilabschnitts der Lenkzwischenwelle gemäß der bevorzugten Ausführungsform der Erfindung;
- Fig. 3: eine Querschnittsansicht der in Fig. 2 dargestellten Schnittebene B-B der Lenkzwischenwelle für ein Kraftfahrzeug gemäß der bevorzugten Ausführungsform der Erfindung;
- Fig. 4: eine vergrößerte Detailansicht des in Fig. 3 dargestellten Bereiches F der Lenkzwischenwelle für ein Kraftfahrzeug gemäß der bevorzugten Ausführungsform der Erfindung;
- Fig. 5: eine Explosionsdarstellung der Lenkzwischenwelle für ein Kraftfahrzeug gemäß der bevorzugten Ausführungsform der Erfindung;
- Fig. 6: eine schematische Darstellung eines Kugelkäfigs der Lenkzwischenwelle gemäß der bevorzugten Ausführungsform der Erfindung;
- Fig. 7: eine Seitenansicht des Kugelkäfigs der Lenkzwischenwelle gemäß der bevorzugten Ausführungsform der Erfindung; und
- Fig. 8: ein Ablaufdiagramm eines Verfahrens zum Betreiben einer Lenkzwischenwelle für ein Kraftfahrzeug gemäß der bevorzugten Ausführungsform.

In den Figuren der Zeichnungen bezeichnen gleiche Bezugszeichen gleiche oder funktionsgleiche Elemente, Bauteile oder Komponenten, soweit nichts Gegenteiliges angegeben ist.

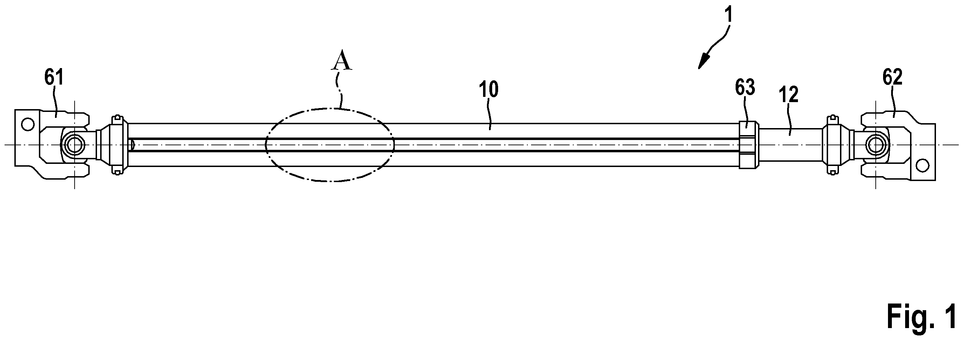

Fig. 1 zeigt eine schematische Darstellung einer Lenkzwischenwelle für ein Kraftfahrzeug gemäß einer bevorzugten Ausführungsform der Erfindung.

Die Lenkzwischenwelle 1 für ein Kraftfahrzeug weist eine äußere Hohlwelle 10, eine innere Hohlwelle 12 und eine (in Fig. 1 nicht gezeigte), die äußere Hohlwelle 10 und die innere Hohlwelle 12 miteinander verbindende Profilwelle auf. Die Lenkzwischenwelle 1 ist an einem ersten Ende mit einem ersten Kugelgelenk 61 und an einem zweiten Ende mit einem zweiten Kugelgelenk 62 verbunden. Die Lenkzwischenwelle 1 ist basierend auf einer Ausgangsstellung teleskopisch verlängerbar und verkürzbar, um bei einem Fahrbetrieb des Kraftfahrzeuges auftretende Relativbewegungen zwischen einer Fahrerkabine und einem Chassis derart auszugleichen, dass diese ohne Beeinträchtigung auf das Lenkverhalten des Fahrzeuges bleiben. Die Lenkzwischenwelle 1 weist des Weiteren an einem Ende der äußeren Hohlwelle 10, an welchem die innere Hohlwelle 12 aus der äußeren Hohlwelle 10 austritt, einen Abstreifer 63 auf, welcher vorzugsweise eine Dichtung aufweist.

Bei einer durch eine Drehbewegung einer Lenksäule des Kraftfahrzeuges herbeigeführten Drehung der äußeren Hohlwelle 10 findet somit eine Übertragung des Drehmoments auf die innere Hohlwelle 12 und von dieser an ein Lenkgetriebe des Kraftfahrzeuges statt.

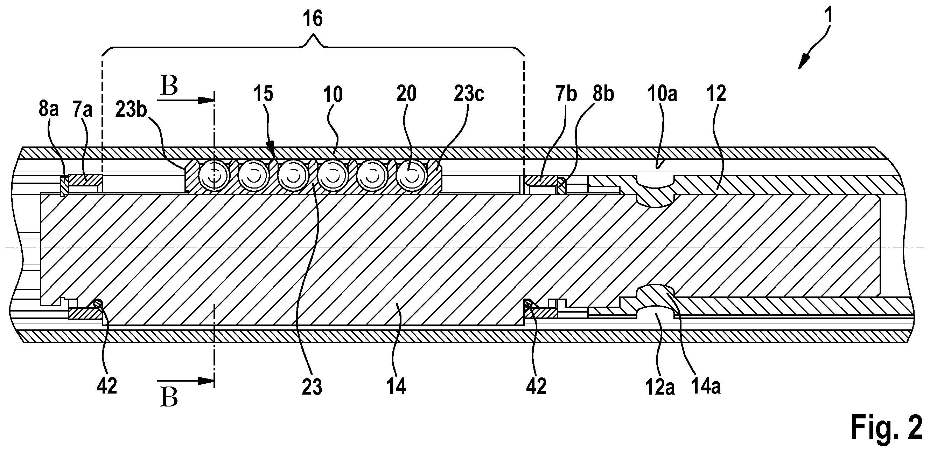

Fig. 2 zeigt eine Längsschnittansicht eines in Fig. 1 gekennzeichneten Teilabschnitts der Lenkzwischenwelle gemäß der bevorzugten Ausführungsform der Erfindung.

Die Lenkzwischenwelle 1 ist in Fig. 2 im montierten Zustand gezeigt. Hierbei ist in die äußere Hohlwelle 10 die Profilwelle 14 eingefügt, mit welcher die innere Hohlwelle 12 verbunden ist. Die Profilwelle 14 ist derart ausgebildet, dass diese durch eine (in Fig. 2 nicht gezeigte) Mehrzahl von Führungsanordnungen in der äußeren Hohlwelle 10 führbar ist. Die Führungsanordnungen ermöglichen ein Verschieben der Profilwelle 14 und der mit ihr verbundenen inneren Hohlwelle 12 in Axialrichtung der äußeren Hohlwelle 10.

Eine erste Führungsanordnung 15 weist jeweils einen (in Fig. 2 nicht gezeigten) an einem Innenumfang 10a der äußeren Hohlwelle 10 im Wesentlichen konkav ausgebildeten Abschnitt, jeweils eine (in Fig. 2 nicht gezeigte) an einem Aufnahmeabschnitt der Profilwelle angeordnete erste Führungsschiene und zweite Führungsschiene, und eine Mehrzahl von Kugeln auf, welche in einem zwischen dem im Wesentlichen konkav ausgebildeten Abschnitt der äußeren Hohlwelle, der ersten Führungsschiene und der zweiten Führungsschiene ausgebildeten Hohlraum angeordnet sind.

Die Kugeln 20 sind vorzugsweise in einen Kugelkäfig 23 eingefügt und durch Aufnahmeeinrichtungen des Kugelkäfigs 23 voneinander getrennt.

Die Lenkzwischenwelle 1 weist des Weiteren an jeweiligen Endabschnitten des Aufnahmeabschnitts der Profilwelle 14 axiale Endanschläge des Kugelkäfigs 23 auf. Die Endanschläge des Kugelkäfigs 23 sind durch einen an einem ersten axialen Endabschnitt 23b des Kugelkäfigs 23 auf der Profilwelle 14 angeordneten ersten Begrenzungsring 7a und einen an einem zweiten axialen Endabschnitt 23c des Kugelkäfigs 23 auf der Profilwelle 14 angeordneten zweiten Begrenzungsring 7b ausgebildet. Der erste Begrenzungsring 7a ist vorzugsweise durch einen ersten Sicherungsring 8a an der Profilwelle 14 fixiert. Der zweite Begrenzungsring 7b ist vorzugsweise durch einen zweiten Sicherungsring 8b an der Profilwelle 14 fixiert.

Des Weiteren ist ein elastisches Element 42 gezeigt, welches zwischen einer (in Fig. 2 nicht gezeigten) Führungsschiene und dem Aufnahmeabschnitt der Profilwelle angeordnet ist.

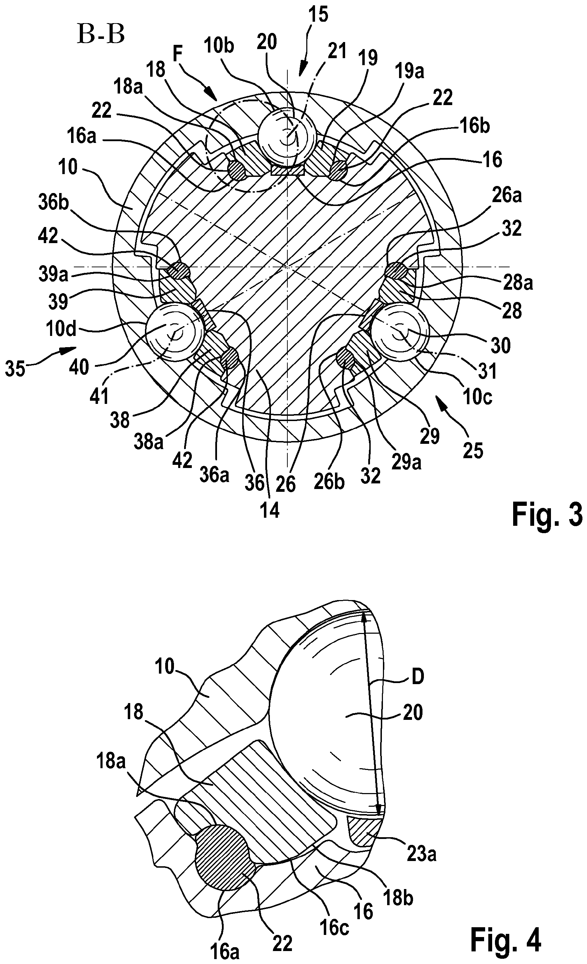

Fig. 3 zeigt eine Querschnittsansicht der in Fig. 2 dargestellten Schnittebene B-B der Lenkzwischenwelle für ein Kraftfahrzeug gemäß der bevorzugten Ausführungsform der Erfindung.

Die äußere Hohlwelle 10 ist in vorliegender Ansicht über die Führungsanordnungen 15, 25, 35 mit der Profilwelle 14 verbunden. In der vorliegenden, bevorzugten Ausführungsform weist die Lenkzwischenwelle 1 drei Führungsanordnungen 15, 25, 35 auf. Die Führungsanordnungen 15, 25, 35 dienen dem Verschieben der Profilwelle 14 und der mit ihr verbundenen inneren Hohlwelle 12 in Axialrichtung der äußeren Hohlwelle 10.

Eine erste Führungsanordnung 15 ist auf der Profilwelle 14 vormontiert und weist einen an einem Innenumfang 10a der äußeren Hohlwelle 10 im Wesentlichen konkav ausgebildeten Abschnitt 10b der äußeren Hohlwelle 10, eine erste Führungsschiene 18, eine zweite Führungsschiene 19 und eine Mehrzahl von Kugeln 20 auf, welche in einem zwischen dem im Wesentlichen konkav ausgebildeten Abschnitt 10b der äußeren Hohlwelle 10, der ersten Führungsschiene 18 und der zweiten Führungsschiene 19 ausgebildeten Hohlraum 21 angeordnet sind.

Die Profilwelle 14 weist einen ersten Aufnahmeabschnitt 16 auf, welcher im Wesentlichen bogenförmig ausgebildet ist. Der erste Aufnahmeabschnitt 16 der Profilwelle, die erste Führungsschiene 18 und die zweite Führungsschiene 19 sind vorzugsweise derart bogenförmig ausgebildet, dass eine Bogenform der ersten Führungsschiene 18 und der zweiten Führungsschiene 19 im Wesentlichen an eine Bogenform des Aufnahmeabschnitts 16 der Profilwelle 14 angepasst ist.

Zwischen der ersten Führungsschiene 18 und dem ersten Aufnahmeabschnitt 16 der Profilwelle 14 und zwischen der zweiten Führungsschiene 19 und dem ersten Aufnahmeabschnitt 16 der Profilwelle 14 ist vorzugsweise ein elastisches Element 22 angeordnet. Das elastische Element 22 ist vorzugsweise teilweise in einer in dem ersten Aufnahmeabschnitt 16 der Profilwelle 14 ausgebildeten ersten Aussparung 16a und zweiten Aussparung 16b und zumindest teilweise in einer in der ersten Führungsschiene 18 ausgebildeten Aussparung 18a und der zweiten Führungsschiene 19 ausgebildeten Aussparung 19a angeordnet.

Das elastische Element 22 ist als Gummiprofil ausgebildet. Alternativ kann das elastische Element 22 beispielsweise als Kunststoffprofil ausgebildet sein. Das elastische Element 22 ist hierbei vorzugsweise an eine Formgebung des ersten Aufnahmeabschnitts 16 der Profilwelle 14 angepasst, wobei das elastische Element 22 vorzugsweise einteilig ausgebildet und in den ersten Aufnahmeabschnitt 16 der Profilwelle 14 eingelegt ist. In der vorliegenden Ausführungsform weist das elastische Element 22 somit eine im Wesentlichen rechteckige Form auf. Alternativ kann das elastische Element 22 beispielsweise auch eine andere geeignete Form aufweisen.

Die zweite Führungsanordnung 25 ist auf der Profilwelle 14 vormontiert und weist einen an einem Innenumfang 10a der äußeren Hohlwelle 10 im Wesentlichen konkav ausgebildeten Abschnitt 10c der äußeren Hohlwelle 10, eine erste Führungsschiene 28, eine zweite Führungsschiene 29 und eine Mehrzahl von Kugeln 30 auf, welche in einem zwischen dem im Wesentlichen konkav ausgebildeten Abschnitt 10c der äußeren Hohlwelle 10, der ersten Führungsschiene 28 und der zweiten Führungsschiene 29 ausgebildeten Hohlraum 31 angeordnet sind.

Die Profilwelle 14 weist einen zweiten Aufnahmeabschnitt 26 auf, welcher im Wesentlichen bogenförmig ausgebildet ist. Der zweite Aufnahmeabschnitt 26 der Profilwelle, die erste Führungsschiene 28 und die zweite Führungsschiene 29 sind vorzugsweise derart bogenförmig ausgebildet, dass eine Bogenform der ersten Führungsschiene 28 und der zweiten Führungsschiene 29 im Wesentlichen an eine Bogenform des zweiten Aufnahmeabschnitts 26 der Profilwelle 14 angepasst ist.

Zwischen der ersten Führungsschiene 28 und dem zweiten Aufnahmeabschnitt 26 der Profilwelle 14 und zwischen der zweiten Führungsschiene 29 und dem zweiten Aufnahmeabschnitt 26 der Profilwelle 14 ist vorzugsweise ein elastisches Element 32 angeordnet. Das elastische Element 32 ist vorzugsweise teilweise in einer in dem zweiten Aufnahmeabschnitt 26 der Profilwelle 14 ausgebildeten ersten Aussparung 26a und zweiten Aussparung 26b und zumindest teilweise in einer in der ersten Führungsschiene 28 ausgebildeten Aussparung 28a und der zweiten Führungsschiene 29 ausgebildeten Aussparung 29a angeordnet.

Das elastische Element 32 ist vorzugsweise als Gummiprofil ausgebildet. Alternativ kann das elastische Element 32 beispielsweise als Kunststoffprofil ausgebildet sein. Das elastische Element 32 ist hierbei vorzugsweise an eine Formgebung des zweiten Aufnahmeabschnitts 26 der Profilwelle 14 angepasst, wobei das elastische Element 32 vorzugsweise einteilig ausgebildet und in den zweiten Aufnahmeabschnitt 26 der Profilwelle 14 eingelegt ist. In der vorliegenden Ausführungsform weist das elastische Element 32 somit eine im Wesentlichen rechteckige Form auf. Alternativ kann das elastische Element 32 beispielsweise auch eine andere geeignete Form aufweisen.

Die dritte Führungsanordnung 35 ist auf der Profilwelle 14 vormontiert und weist einen an einem Innenumfang 10a der äußeren Hohlwelle 10 im Wesentlichen konkav ausgebildeten Abschnitt 10e der äußeren Hohlwelle 10, eine erste Führungsschiene 38, eine zweite Führungsschiene 39 und eine Mehrzahl von Kugeln 40 auf, welche in einem zwischen dem im Wesentlichen konkav ausgebildeten Abschnitt 10e der äußeren Hohlwelle 10, der ersten Führungsschiene 38 und der zweiten Führungsschiene 39 ausgebildeten Hohlraum 41 angeordnet sind.

Die Profilwelle 14 weist einen dritten Aufnahmeabschnitt 36 auf, welcher im Wesentlichen bogenförmig ausgebildet ist. Der dritte Aufnahmeabschnitt 36 der Profilwelle, die erste Führungsschiene 38 und die zweite Führungsschiene 39 sind vorzugsweise derart bogenförmig ausgebildet, dass eine Bogenform der ersten Führungsschiene 38 und der zweiten Führungsschiene 39 im Wesentlichen an eine Bogenform des dritten Aufnahmeabschnitts 36 der Profilwelle 14 angepasst ist.

Zwischen der ersten Führungsschiene 38 und dem dritten Aufnahmeabschnitt 36 der Profilwelle 14 und zwischen der zweiten Führungsschiene 39 und dem dritten Aufnahmeabschnitt 36 der Profilwelle 14 ist vorzugsweise ein elastisches Element 42 angeordnet. Das elastische Element 42 ist vorzugsweise teilweise in einer in dem dritten Aufnahmeabschnitt 36 der Profilwelle 14 ausgebildeten ersten Aussparung 36a und zweiten Aussparung 36b und zumindest teilweise in einer in der ersten Führungsschiene 38 ausgebildeten Aussparung 38a und der zweiten Führungsschiene 39 ausgebildeten Aussparung 39a angeordnet.

Das elastische Element 42 ist vorzugsweise als Gummiprofil ausgebildet. Alternativ kann das elastische Element 42 beispielsweise als Kunststoffprofil ausgebildet sein. Das elastische Element 42 ist hierbei vorzugsweise an eine Formgebung des dritten Aufnahmeabschnitts 36 der Profilwelle 14 angepasst, wobei das elastische Element 42 vorzugsweise einteilig ausgebildet und in den dritten Aufnahmeabschnitt 36 der Profilwelle 14 eingelegt ist. In der vorliegenden Ausführungsform weist das elastische Element 42 somit eine im Wesentlichen rechteckige Form auf. Alternativ kann das elastische Element 42 beispielsweise auch eine andere geeignete Form aufweisen.

Fig. 4 zeigt eine vergrößerte Detailansicht des in Fig. 3 dargestellten Bereiches F der Lenkzwischenwelle für ein Kraftfahrzeug gemäß der bevorzugten Ausführungsform der Erfindung.

Eine dem ersten Aufnahmeabschnitt 16 der Profilwelle 14 gegenüberliegend angeordnete Oberfläche 18b der ersten Führungsschiene 18 weist benachbart zu der in der ersten Führungsschiene 18 ausgebildeten Aussparung 18a zur Aufnahme des elastischen Elementes 22 vorzugsweise eine Krümmung auf, welche größer als eine Krümmung einer Oberfläche 16c des ersten Aufnahmeabschnitts 16 der Profilwelle 14 ist. Die Oberfläche 18b der ersten Führungsschiene 18 ist insbesondere vorzugsweise derart ausgebildet, dass die Oberfläche 18b benachbart zu der, in der ersten Führungsschiene 18 ausgebildeten Aussparung 18a zur Aufnahme des elastischen Elementes 22, beidseitig jeweils eine Krümmung aufweist, welche größer als eine Krümmung einer Oberfläche 16c des ersten Aufnahmeabschnitts 16 der Profilwelle 14 ist.

Die erste Führungsschiene 18 weist somit auf dem Aufnahmeabschnitt 16 der Profilwelle 14 zwei Auflageflächen auf, wobei die Auflageflächen wesentlich geringer als die Oberfläche 16c des ersten Aufnahmeabschnitts 16 der Profilwelle 14 ausgebildet sind.

Somit weist die erste Führungsschiene 18 in vorteilhafter Weise nur eine geringe Auflagefläche auf die Oberfläche 16c des ersten Aufnahmeabschnitts 16 der Profilwelle 14 auf. Dadurch kann eine reibungsarme Gleitbewegung der ersten Führungsschiene 18 entlang der Oberfläche des ersten Aufnahmeabschnitts 16 der Profilwelle 14 ermöglicht werden.

Die erste Führungsschiene 18 ist in vorteilhafter Weise um die Oberfläche 16c des ersten Aufnahmeabschnitts 16 der Profilwelle 14 drehbar gelagert. Somit kann beispielsweise bei einer Drehmomentübertragung von der äußeren Hohlwelle 10 auf die Profilwelle 14 ein effektiver Spielausgleich der ersten Führungsanordnung 15 zu der äußeren Hohlwelle 10 gewährleistet werden.

Die erste Führungsschiene 18 ist vorzugsweise in Relation zu dem ersten Aufnahmeabschnitt 16 der Profilwelle 14 derart angeordnet, dass die in der ersten Führungsschiene 18 ausgebildete Aussparung 18a zur Aufnahme des elastischen Elementes 22 zu der in dem ersten Aufnahmeabschnitt 16 der Profilwelle 14 ausgebildeten ersten Aussparung 16a zur Aufnahme des elastischen Elementes 22 in einem vorbestimmten Abstand zueinander versetzt angeordnet. Somit wird das elastische Element 22 geschert und beaufschlagt die erste Führungsanordnung 15 mit einer Vorspannung.

Des Weiteren ist in Fig. 4 ein Bodenabschnitt 23a des Kugelkäfigs zur Aufnahme der Mehrzahl von Kugeln 20 gezeigt.

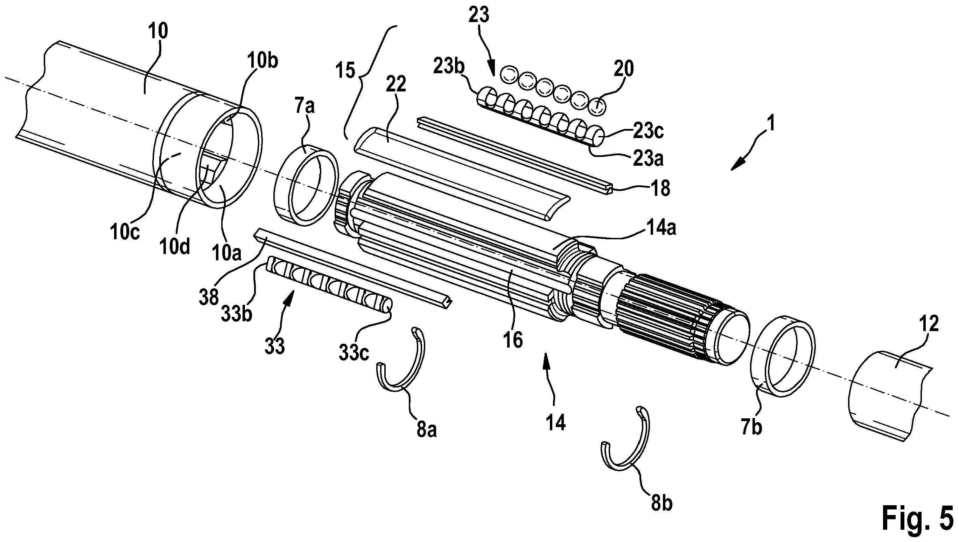

Fig. 5 zeigt eine Explosionsdarstellung der Lenkzwischenwelle für ein Kraftfahrzeug gemäß der bevorzugten Ausführungsform der Erfindung.

Die Lenkzwischenwelle 1 für ein Kraftfahrzeug weist die äußere Hohlwelle 10, die innere Hohlwelle 12 und die, die äußere Hohlwelle 10 und die innere Hohlwelle 12 miteinander verbindende Profilwelle 14 auf. Die Profilwelle 14 ist derart ausgebildet, dass diese durch die Mehrzahl von Führungsanordnungen 15 in der äußeren Hohlwelle 10 führbar ist. In der Darstellung der Fig. 5 ist nur eine der Mehrzahl von Führungsanordnungen gezeigt. Die Führungsanordnungen 15 ermöglichen ein Verschieben der Profilwelle 14 und der mit ihr verbundenen inneren Hohlwelle 12 in Axialrichtung der äußeren Hohlwelle 10. Die Mehrzahl von Führungsanordnungen 15 weisen jeweils einen an dem Innenumfang 10a der äußeren Hohlwelle 10 im Wesentlichen konkav ausgebildeten Abschnitt 10b, 10c, 10d, jeweils eine an dem ersten Aufnahmeabschnitt 16 der Profilwelle 14 angeordnete, erste Führungsschiene 18 und (in Fig. 5 nicht gezeigte) zweite Führungsschiene auf. Des Weiteren weist die Mehrzahl von Führungsanordnungen 15 eine Mehrzahl von zwischen dem jeweils im Wesentlichen konkav ausgebildeten Abschnitt 10b, 10c, 10d der äußeren Hohlwelle 10 und der ersten und zweiten Führungsschiene angeordnete Kugeln 20 auf. Die Kugeln 20 sind vorzugsweise in einen Kugelkäfig 23 eingefügt.

Die Lenkzwischenwelle 1 weist des Weiteren an jeweiligen Endabschnitten der Aufnahmeabschnitte 16, 26, 36 der Profilwelle 14 axiale Endanschläge 23b, 23c des Kugelkäfigs 23 auf. Die axialen Endanschläge 23b, 23c des Kugelkäfigs 23 sind durch den an dem ersten axialen Endabschnitt 23b des Kugelkäfigs 23 auf der Profilwelle 14 angeordneten ersten Begrenzungsring 7a und den an dem zweiten axialen Endabschnitt 23c des Kugelkäfigs 23 auf der Profilwelle 14 angeordneten zweiten Begrenzungsring 7b ausgebildet. Der erste Begrenzungsring 7a ist vorzugsweise durch den ersten Sicherungsring 8a an der Profilwelle 14 fixiert. Der zweite Begrenzungsring 7b ist vorzugsweise durch den zweiten Sicherungsring 8b an der Profilwelle 14 fixiert.

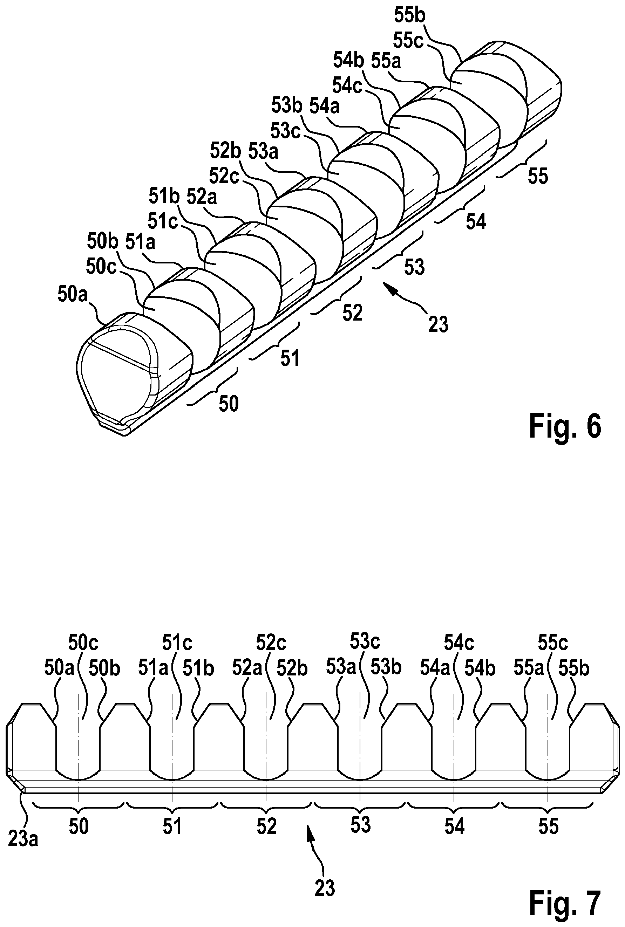

Fig. 6 zeigt eine schematische Darstellung eines Kugelkäfigs der Lenkzwischenwelle gemäß der bevorzugten Ausführungsform der Erfindung.

Die Mehrzahl von (in Fig. 6 nicht gezeigten) Kugeln sind vorzugsweise in dem Kugelkäfig 23 angeordnet. Der Kugelkäfig 23 weist in vorteilhafter Weise eine Mehrzahl von im Wesentlichen hohlzylindrisch ausgebildeten Aufnahmeeinrichtungen 50, 51, 52, 53, 54, 55 zur Aufnahme der Kugeln auf. Eine jeweilige Aufnahmeeinrichtung 50, 51, 52, 53, 54, 55 weist zwei in Axialrichtung der Aufnahmeeinrichtung 50, 51, 52, 53, 54, 55 voneinander beabstandet angeordnete halbzylindrische Aufnahmeelemente 50a, 50b, 51a, 51b, 52a, 52b, 53a, 53b, 54a, 54b, 55a, 55b auf, welche in einem Einfügebereich 50c, 51c, 52c, 53c, 54c, 55c zum Einfügen der Kugeln abgeschrägt sind.

Fig. 7 zeigt eine Seitenansicht des Kugelkäfigs der Lenkzwischenwelle gemäß der bevorzugten Ausführungsform der Erfindung.

Die halbzylindrischen Aufnahmeelemente 50a, 50b, 51a, 51b, 52a, 52b, 53a, 53b, 54a, 54b, 55a, 55b sind vorzugsweise derart in Axialrichtung voneinander beabstandet, dass ein Abstand zwischen jeweils zwei Aufnahmeelementen 50a, 50b, 51a, 51b, 52a, 52b, 53a, 53b, 54a, 54b, 55a, 55 der Aufnahmeeinrichtung 50, 51, 52, 53, 54, 55 in dem Einfügebereich 50c, 51c, 52c, 53c, 54c, 55c zum Einfügen der Kugeln geringer als ein Durchmesser einer jeweiligen Kugel ausgebildet ist.

Die Mehrzahl von im Wesentlichen hohlzylindrisch ausgebildeten Aufnahmeeinrichtungen 50, 51, 52, 53, 54, 55 sind vorzugsweise an dem Bodenabschnitt 23a des Kugelkäfigs 23 durch eine in Axialrichtung des Kugelkäfigs 23 ausgebildete Leiste verbunden. Die Aufnahmeelemente 50a, 50b, 51a, 51b, 52a, 52b, 53a, 53b, 54a, 54b, 55a, 55b sind vorzugsweise relativ zu der am Bodenabschnitt 23a des Kugelkäfigs 23 ausgebildeten Leiste in Axialrichtung des Kugelkäfigs 23 biegbar ausgebildet.

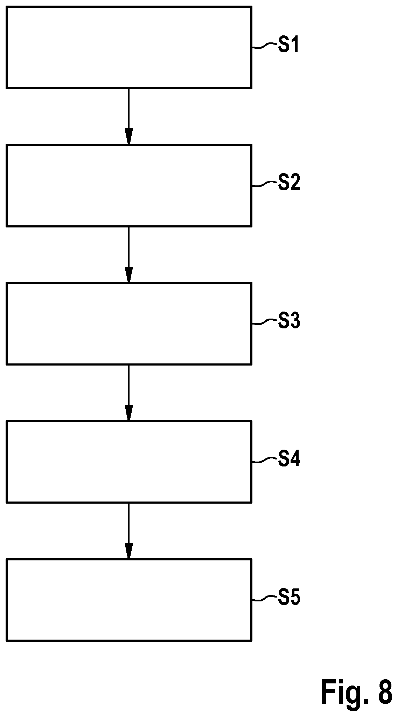

Fig. 8 zeigt ein Ablaufdiagramm eines Verfahrens zum Betreiben einer Lenkzwischenwelle für ein Kraftfahrzeug gemäß einer bevorzugten Ausführungsform.

Das Verfahren zum Betreiben der Lenkzwischenwelle für ein Kraftfahrzeug umfasst ein Bereitstellen S1 einer äußeren Hohlwelle. Das Verfahren umfasst des Weiteren ein Bereitstellen S2 einer zumindest teilweise in der äußeren Hohlwelle angeordneten inneren Hohlwelle.

Das Verfahren umfasst überdies ein Bereitstellen S3 einer in der äußeren Hohlwelle angeordneten, die äußere Hohlwelle und die innere Hohlwelle miteinander verbindenden Profilwelle.

Das Verfahren umfasst darüber hinaus ein Bereitstellen S4 einer Mehrzahl von, die Profilwelle in der äußeren Hohlwelle führenden Führungsanordnungen zum Verschieben der Profilwelle und der mit ihr verbundenen inneren Hohlwelle in Axialrichtung der äußeren Hohlwelle, wobei die Mehrzahl von Führungsanordnungen einen an einem Innenumfang der äußeren Hohlwelle im Wesentlichen konkav ausgebildeten Abschnitt, eine an einem Aufnahmeabschnitt der Profilwelle angeordnete erste Führungsschiene, eine an dem Aufnahmeabschnitt der Profilwelle angeordnete zweite Führungsschiene, und eine Mehrzahl von Kugeln, welche in einem zwischen dem im Wesentlichen konkav ausgebildeten Abschnitt der äußeren Hohlwelle, der ersten Führungsschiene und der zweiten Führungsschiene ausgebildeten Hohlraum angeordnet sind, bereitstellen.

Das Verfahren umfasst des Weiteren ein Bereitstellen S5 eines elastischen Elementes zumindest teilweise in einer in dem Aufnahmeabschnitt der Profilwelle ausgebildeten ersten Aussparung und zweiten Aussparung und zumindest teilweise in einer in der ersten Führungsschiene ausgebildeten Aussparung und der zweiten Führungsschiene ausgebildeten Aussparung, welches die jeweilige Führungsanordnung mit einer Vorspannung beaufschlagt.

Obwohl die vorliegende Erfindung anhand bevorzugter Ausführungsbeispiele vorstehend beschrieben wurde, ist sie nicht darauf beschränkt, sondern auf vielfältige Art und Weise gemäß anhängigen Ansprüchen modifizierbar.

Beispielsweise kann eine Form, Abmessung und/oder ein Bearbeitungs- bzw. Herstellungsverfahren der Komponenten der Lenkzwischenwelle abgeändert werden.

### Bezugszeichenliste

- 1: Lenkzwischenwelle
- 7a: erster Begrenzungsring
- 7b: zweiter Begrenzungsring
- 8a: erster Sicherungsring
- 8b: zweiter Sicherungsring
- 10: äußere Hohlwelle
- 10a: Innenumfang (der äußeren Hohlwelle)
- 10b: konkav ausgebildeter Abschnitt (des Innenumfangs der äußeren Hohlwelle)
- 10c: konkav ausgebildeter Abschnitt (des Innenumfangs der äußeren Hohlwelle)
- 10d: konkav ausgebildeter Abschnitt (des Innenumfangs der äußeren Hohlwelle)
- 12: innere Hohlwelle
- 12a: Innenumfang (der inneren Hohlwelle)
- 14: Profilwelle
- 14a: konkav ausgebildeter Abschnitt (der Profilwelle)
- 15: erste Führungsanordnung
- 16: Aufnahmeabschnitt
- 16a, 26a, 36a: erste Aussparung
- 16b, 26b, 36b: zweite Aussparung
- 18, 28, 38: erste Führungsschiene
- 18a, 28a, 38a: Aussparung
- 18b, 28b, 38b: Oberfläche
- 19, 29, 39: zweite Führungsschiene
- 19a, 29a, 39a: Aussparung
- 20, 30, 40: Kugeln
- 21, 31, 41: Hohlraum
- 22, 32, 42: elastisches Element
- 23: Kugelkäfig
- 23a: Bodenabschnitt (des Kugelkäfigs)
- 23b, 23c: axialer Endabschnitt (des Kugelkäfigs)
- 25: zweite Führungsanordnung
- 26: zweiter Aufnahmeabschnitt
- 35: dritte Führungsanordnung
- 36: dritter Aufnahmeabschnitt
- 50, 51, 52, 53, 54, 55: Aufnahmeeinrichtung
- 50a, 50b, 51a, 51b: Aufnahmeelement
- 52a, 52b, 53a, 53b: Aufnahmeelement
- 54a, 54b, 55a, 55b: Aufnahmeelement
- 50c, 51c, 52c: Einfügebereich
- 53c, 54c, 55c: Einfügebereich
- 61, 62: Kugelgelenk
- 63: Abstreifer
- D: Durchmesser
- F: Bereich

## Patentansprüche

1. Lenkzwischenwelle (1) für ein Kraftfahrzeug:
mit einer äußeren Hohlwelle (10);
mit einer zumindest teilweise in der äußeren Hohlwelle (10) angeordneten inneren Hohlwelle (12);
mit einer in der äußeren Hohlwelle (10) angeordneten, die äußere Hohlwelle (10) und die innere Hohlwelle (12) miteinander verbindenden Profilwelle (14);
mit einer Mehrzahl von, die Profilwelle (14) in der äußeren Hohlwelle (10) führenden Führungsanordnungen (15, 25, 35) zum Verschieben der Profilwelle (14) und der mit ihr verbundenen inneren Hohlwelle (12) in Axialrichtung der äußeren Hohlwelle (10), wobei die Mehrzahl von Führungsanordnungen (15, 25, 35) einen an einem Innenumfang (10a) der äußeren Hohlwelle (10) im Wesentlichen konkav ausgebildeten Abschnitt (10b, 10c, 10d), eine an einem Aufnahmeabschnitt (16, 26, 36) der Profilwelle (14) angeordnete erste Führungsschiene (18, 28, 38), eine an dem Aufnahmeabschnitt (16, 26, 36) der Profilwelle (14) angeordnete zweite Führungsschiene (19, 29, 39), und eine Mehrzahl von Kugeln (20, 30, 40), welche in einem zwischen dem im Wesentlichen konkav ausgebildeten Abschnitt (10b, 10c, 10d) der äußeren Hohlwelle (10), der ersten Führungsschiene (18, 28, 38) und der zweiten Führungsschiene (19, 29, 39) ausgebildeten Hohlraum (21, 31, 41) angeordnet sind, aufweisen; und
mit einem zwischen der ersten Führungsschiene (18, 28, 38) und dem Aufnahmeabschnitt (16, 26, 36) der Profilwelle (14) und zwischen der zweiten Führungsschiene (19, 29, 39) und dem Aufnahmeabschnitt (16, 26, 36) der Profilwelle (14) angeordneten elastischen Element (22, 32, 42), wobei das elastische Element (22, 32, 42) zumindest teilweise in einer in dem Aufnahmeabschnitt (16, 26, 36) der Profilwelle (14) ausgebildeten ersten Aussparung (16a, 26a, 36a) und zweiten Aussparung (16b, 26b, 36b) und zumindest teilweise in einer in der ersten Führungsschiene (18, 28, 38) ausgebildeten Aussparung (18a, 28a, 38a) und der zweiten Führungsschiene (19, 29, 39) ausgebildeten Aussparung (19a, 29a, 39a) angeordnet und dazu ausgebildet ist, die jeweilige Führungsanordnung (15, 25, 35) mit einer Vorspannung zu beaufschlagen, **dadurch gekennzeichnet dass** die erste Führungsschiene (18, 28, 38) in Relation zu dem Aufnahmeabschnitt (16, 26, 36) der Profilwelle (14) derart angeordnet ist, dass die in der ersten Führungsschiene (18, 28, 38) ausgebildete Aussparung (18a, 28a, 38a) zur Aufnahme des elastischen Elementes (22, 32, 42) zu der in dem Aufnahmeabschnitt (16, 26, 36) der Profilwelle (14) ausgebildeten ersten Aussparung (16a, 26a, 36a) zur Aufnahme des elastischen Elementes (22, 32, 42) in einem vorbestimmten Abstand zueinander versetzt angeordnet sind;
wobei die zweite Führungsschiene (19, 29, 39) in Relation zu dem Aufnahmeabschnitt (16, 26, 36) der Profilwelle (14) derart angeordnet ist, dass die in der zweiten Führungsschiene (19, 29, 39) ausgebildete Aussparung (19a, 29a, 39a) zur Aufnahme des elastischen Elementes (22, 32, 42) zu der in dem Aufnahmeabschnitt (16, 26, 36) der Profilwelle (14) ausgebildeten zweiten Aussparung (16b, 26b, 36b) zur Aufnahme des elastischen Elementes (22, 32, 42) in einem vorbestimmten Abstand zueinander versetzt angeordnet sind;
wobei das elastische Element (22, 32, 42) zum Spielausgleich der Führungsanordnung (15, 25, 35) in Breitenrichtung geschert ist

2. Lenkzwischenwelle nach Anspruch 1, **dadurch gekennzeichnet, dass** der Aufnahmeabschnitt (16, 26, 36) der Profilwelle (14), die erste Führungsschiene (18, 28, 38) und die zweite Führungsschiene (19, 29, 39) derart bogenförmig ausgebildet sind, dass eine Bogenform der ersten Führungsschiene (18, 28, 38) und der zweiten Führungsschiene (19, 29, 39) im Wesentlichen an eine Bogenform des Aufnahmeabschnitts (16, 26, 36) der Profilwelle (14) angepasst ist.

3. Lenkzwischenwelle nach Anspruch 1 oder 2, **dadurch gekennzeichnet, dass** eine dem Aufnahmeabschnitt (16, 26, 36) der Profilwelle (14) gegenüberliegend angeordnete Oberfläche (18b, 28b, 38b) der ersten Führungsschiene (18, 28, 38) benachbart zu der in der ersten Führungsschiene (18, 28, 38) ausgebildeten Aussparung (18a, 28a, 38a) zur Aufnahme des elastischen Elementes (22, 32, 42) zumindest abschnittsweise eine Krümmung aufweist, welche größer als eine Krümmung einer Oberfläche (16c, 26c, 36c) des Aufnahmeabschnitts (16, 26, 36) der Profilwelle (14) ist und eine dem Aufnahmeabschnitt (16, 26, 36) der Profilwelle (14) gegenüberliegend angeordnete Oberfläche der zweiten Führungsschiene (19, 29, 39) benachbart zu der in der zweiten Führungsschiene (19, 29, 39) ausgebildeten Aussparung (19a, 29a, 39a) zur Aufnahme des elastischen Elementes (22, 32, 42) zumindest abschnittsweise eine Krümmung aufweist, welche größer als eine Krümmung der Oberfläche (16c, 26c, 36c) des Aufnahmeabschnitts (16, 26, 36) der Profilwelle (14) ist.

4. Lenkzwischenwelle nach Anspruch 3, **dadurch gekennzeichnet, dass** die erste Führungsschiene (18, 28, 38) und die zweite Führungsschiene (19, 29, 39) um die Oberfläche (16c, 26c, 36c) des Aufnahmeabschnitts (16, 26, 36) der Profilwelle (14) drehbar gelagert sind.

5. Lenkzwischenwelle nach einem der vorhergehenden Ansprüche, **dadurch gekennzeichnet, dass** die Mehrzahl von Kugeln (20, 30, 40) in einem Kugelkäfig (23, 33) angeordnet sind, welcher eine Mehrzahl von im Wesentlichen hohlzylindrisch ausgebildeten Aufnahmeeinrichtungen (50, 51, 52, 53, 54, 55) zur Aufnahme der Kugeln (20, 30, 40) aufweist, wobei eine Aufnahmeeinrichtung (50, 51, 52, 53, 54, 55) jeweils zwei in Axialrichtung der Aufnahmeeinrichtung (50, 51, 52, 53, 54, 55) voneinander beabstandet angeordnete halbzylindrische Aufnahmeelemente (50a, 50b, 51a, 51b, 52a, 52b, 53a, 53b, 54a, 54b, 55a, 55b) aufweist, welche in einem Einfügebereich (50c, 51c, 52c, 53c, 54c, 55c) zum Einfügen der Kugeln (20, 30, 40) abgeschrägt sind.

6. Lenkzwischenwelle nach Anspruch 5, **dadurch gekennzeichnet, dass** die halbzylindrischen Aufnahmeelemente (50a, 50b, 51a, 51b, 52a, 52b, 53a, 53b, 54a, 54b, 55a, 55b) derart in Axialrichtung voneinander beabstandet sind, dass ein Abstand zwischen jeweils zwei Aufnahmeelementen (50a, 50b, 51a, 51b, 52a, 52b, 53a, 53b, 54a, 54b, 55a, 55b) der Aufnahmeeinrichtung (50, 51, 52, 53, 54, 55) in dem Einfügebereich (50c, 51c, 52c, 53c, 54c, 55c) zum Einfügen der Kugeln (20, 30, 40) geringer als ein Durchmesser (D) einer jeweiligen Kugel (20, 30, 40) ausgebildet ist.

7. Lenkzwischenwelle nach Anspruch 5 oder 6, **dadurch gekennzeichnet, dass** die Mehrzahl von im Wesentlichen hohlzylindrisch ausgebildeten Aufnahmeeinrichtungen (50, 51, 52, 53, 54, 55) an einem Bodenabschnitt (23a, 33a) des Kugelkäfigs (23, 33) durch eine in Axialrichtung des Kugelkäfigs (23, 33) ausgebildete Leiste verbunden sind, wobei die Aufnahmeelemente (50a, 50b, 51a, 51b, 52a, 52b, 53a, 53b, 54a, 54b, 55a, 55b) relativ zu der am Bodenabschnitt (23a, 33a) des Kugelkäfigs (23, 33) ausgebildeten Leiste in Axialrichtung des Kugelkäfigs (23, 33) biegbar sind.

8. Lenkzwischenwelle nach einem der Ansprüche 5 bis 7, **dadurch gekennzeichnet, dass** ein axialer Endanschlag des Kugelkäfigs (23, 33) durch an axialen Endabschnitten (23b, 23c, 33b, 33c) des Kugelkäfigs (23, 33) auf der Profilwelle (14) angeordneten Begrenzungsringen (7a, 7b) ausgebildet ist, wobei die Begrenzungsringe (7a, 7b) jeweils durch einen Sicherungsring (8a, 8b) an der Profilwelle (14) fixiert sind.

9. Lenkzwischenwelle nach einem der vorhergehenden Ansprüche, **dadurch gekennzeichnet, dass** die innere Hohlwelle (12) und die Profilwelle (14) in einem Überlappungsbereich jeweils benachbart zueinander angeordnete, in Umfangsrichtung konkav ausgebildete Abschnitte (12a, 14a) aufweisen, wobei der konkav ausgebildete Abschnitt (12a) der inneren Hohlwelle (12) mit dem konkav ausgebildeten Abschnitt (14a) der Profilwelle (14) zum axialen Befestigen der Profilwelle (14) an der inneren Hohlwelle (12) in Eingriff ist.

## Claims

1. Intermediate steering shaft (1) for a motor vehicle, having:
an outer hollow shaft (10);
an inner hollow shaft (12) which is arranged at least partially in the outer hollow shaft (10);
a profiled shaft (14) which is arranged in the outer hollow shaft (10) and which connects the outer hollow shaft (10) and the inner hollow shaft (12) to one another; and
a multiplicity of guide arrangements (15, 25, 35) which guide the profiled shaft (14) in the outer hollow shaft (10) and which serve for the displacement of the profiled shaft (14) and of the inner hollow shaft (12), which is connected to said profiled shaft, in an axial direction of the outer hollow shaft (10), wherein the multiplicity of guide arrangements (15, 25, 35) has a section (10b, 10c, 10d) of substantially concave form on an inner circumference (10a) of the outer hollow shaft (10), a first guide rail (18, 28, 38) arranged on a receiving section (16, 26, 36) of the profiled shaft (14), a second guide rail (19, 29, 39) arranged on the receiving section (16, 26, 36) of the profiled shaft (14), and a multiplicity of balls (20, 30, 40) which are arranged in a cavity (21, 31, 41) formed between the section (10b, 10c, 10d) of substantially concave form of the outer hollow shaft (10), the first guide rail (18, 28, 38) and the second guide rail (19, 29, 39); and having an elastic element (22, 32, 42) which is arranged between the first guide rail (18, 28, 38) and the receiving section (16, 26, 36) of the profiled shaft (14) and between the second guide rail (19, 29, 39) and the receiving section (16, 26, 36) of the profiled shaft (14), wherein the elastic element (22, 32, 42) is arranged at least partially in a first recess (16a, 26a, 36a) and second recess (16b, 26b, 36b) formed in the receiving section (16, 26, 36) of the profiled shaft (14) and at least partially in a recess (18a, 28a, 38a) formed in the first guide rail (18, 28, 38) and in a recess (19a, 29a, 39a) formed in the second guide rail (19, 29, 39), and is designed to exert a preload on the respective guide arrangement (15, 25, 35), **characterized in that**
the first guide rail (18, 28, 38) is arranged in relation to the receiving section (16, 26, 36) of the profiled shaft (14) such that the recess (18a, 28a, 38a) formed in the first guide rail (18, 28, 38) for receiving the elastic element (22, 32, 42) is arranged offset with a predetermined spacing with respect to the first recess (16a, 26a, 36a) formed in the receiving section (16, 26, 36) of the profiled shaft (14) for receiving the elastic element (22, 32, 42);
wherein the second guide rail (19, 29, 39) is arranged in relation to the receiving section (16, 26, 36) of the profiled shaft (14) such that the recess (19a, 29a, 39a) formed in the second guide rail (19, 29, 39) for receiving the elastic element (22, 32, 42) is arranged offset with a predetermined spacing with respect to the second recess (16b, 26b, 36b) formed in the receiving section (16, 26, 36) of the profiled shaft (14) for receiving the elastic element (22, 32, 42);
wherein the elastic element (22, 32, 42) can be placed under shear load in a width direction for the purposes of play compensation of the guide arrangement (15, 25, 35).

2. Intermediate steering shaft according to Claim 1, **characterized in that** the receiving section (16, 26, 36) of the profiled shaft (14), the first guide rail (18, 28, 38) and the second guide rail (19, 29, 39) are of arc-shaped form such that an arc shape of the first guide rail (18, 28, 38) and of the second guide rail (19, 29, 39) is substantially adapted to an arc shape of the receiving section (16, 26, 36) of the profiled shaft (14).

3. Intermediate steering shaft according to Claim 1 or 2, **characterized in that** a surface (18b, 28b, 38b) of the first guide rail (18, 28, 38), which surface is arranged so as to be situated opposite the receiving section (16, 26, 36) of the profiled shaft (14), has, adjacent to the recess (18a, 28a, 38a) formed in the first guide rail (18, 28, 38) for receiving the elastic element (22, 32, 42), a curvature at least in sections, which curvature is greater than a curvature of a surface (16c, 26c, 36c) of the receiving section (16, 26, 36) of the profiled shaft (14), and a surface of the second guide rail (19, 29, 39), which surface is arranged so as to be situated opposite the receiving section (16, 26, 36) of the profiled shaft (14), has, adjacent to the recess (19a, 29a, 39a) formed in the second guide rail (19, 29, 39) for receiving the elastic element (22, 32, 42), a curvature at least in sections, which curvature is greater than a curvature of the surface (16c, 26c, 36c) of the receiving section (16, 26, 36) of the profiled shaft (14).

4. Intermediate steering shaft according to Claim 3, **characterized in that** the first guide rail (18, 28, 38) and the second guide rail (19, 29, 39) are mounted so as to be rotatable about the surface (16c, 26c, 36c) of the receiving section (16, 26, 36) of the profiled shaft (14).

5. Intermediate steering shaft according to one of the preceding claims, **characterized in that** the multiplicity of balls (20, 30, 40) is arranged in a ball cage (23, 33) which has a multiplicity of receiving devices (50, 51, 52, 53, 54, 55) of substantially hollow cylindrical form for receiving the balls (20, 30, 40), wherein a receiving device (50, 51, 52, 53, 54, 55) has in each case two semicylindrical receiving elements (50a, 50b, 51a, 51b, 52a, 52b, 53a, 53b, 54a, 54b, 55a, 55b) which are arranged spaced apart from one another in an axial direction of the receiving device (50, 51, 52, 53, 54, 55) and which are beveled in an insertion region (50c, 51c, 52c, 53c, 54c, 55c) for the insertion of the balls (20, 30, 40).

6. Intermediate steering shaft according to Claim 5, **characterized in that** the semicylindrical receiving elements (50a, 50b, 51a, 51b, 52a, 52b, 53a, 53b, 54a, 54b, 55a, 55b) are arranged spaced apart from one another in the axial direction such that a spacing between in each case two receiving elements (50a, 50b, 51a, 51b, 52a, 52b, 53a, 53b, 54a, 54b, 55a, 55b) of the receiving device (50, 51, 52, 53, 54, 55) in the insertion region (50c, 51c, 52c, 53c, 54c, 55c) for the insertion of the balls (20, 30, 40) is smaller than a diameter (D) of a respective ball (20, 30, 40).

7. Intermediate steering shaft according to Claim 5 or 6, **characterized in that** the multiplicity of receiving devices (50, 51, 52, 53, 54, 55) of substantially hollow cylindrical form is connected to a base section (23a, 33a) of the ball cage (23, 33) by means of a strip formed in the axial direction of the ball cage (23, 33), wherein the receiving elements (50a, 50b, 51a, 51b, 52a, 52b, 53a, 53b, 54a, 54b, 55a, 55b) are bendable in the axial direction of the ball cage (23, 33) relative to the strip formed on the base section (23a, 33a) of the ball cage (23, 33).

8. Intermediate steering shaft according to one of Claims 5 to 7, **characterized in that** an axial end stop of the ball cage (23, 33) is formed by delimiting rings (7a, 7b) arranged on the profiled shaft (14) at axial end sections (23b, 23c, 33b, 33c) of the ball cage (23, 33), wherein the delimiting rings (7a, 7b) are fixed on the profiled shaft (14) in each case by means of a securing ring (8a, 8b).

9. Intermediate steering shaft according to one of the preceding claims, **characterized in that** the inner hollow shaft (12) and the profiled shaft (14) have, in an overlap region, in each case mutually adjacently arranged sections (12a, 14a) which are of concave form in a circumferential direction, wherein the concavely formed section (12a) of the inner hollow shaft (12) engages with the concavely formed section (14a) of the profiled shaft (14) for the purposes of axially fastening the profiled shaft (14) to the inner hollow shaft (12).

## Revendications

1. Arbre intermédiaire de direction (1) pour un véhicule automobile :
comprenant un arbre creux extérieur (10) ;
comprenant un arbre creux intérieur (12) disposé au moins partiellement dans l'arbre creux extérieur (10) ;
comprenant un arbre profilé (14) disposé dans l'arbre creux extérieur (10) et reliant l'un à l'autre l'arbre creux extérieur (10) et l'arbre creux intérieur (12) ;
comprenant une pluralité d'agencements de guidage (15, 25, 35) guidant l'arbre profilé (14) dans l'arbre creux extérieur (10) et servant à déplacer l'arbre profilé (14) et l'arbre creux intérieur (12) relié à celui-ci dans la direction axiale de l'arbre creux extérieur (10), dans lequel la pluralité d'agencements de guidage (15, 25, 35) comprennent une partie (10b, 10c, 10d) de forme sensiblement concave au niveau d'une périphérie intérieure (10a) de l'arbre creux extérieur (10), un premier rail de guidage (18, 28, 38) disposé au niveau d'une partie de réception (16, 26, 36) de l'arbre profilé (14), un deuxième rail de guidage (19, 29, 39) disposé au niveau de la partie de réception (16, 26, 36) de l'arbre profilé (14), et une pluralité de billes (20, 30, 40), lesquelles sont disposées dans une cavité (21, 31, 41) formée entre la partie (10b, 10c, 10d) de forme sensiblement concave de l'arbre creux extérieur (10), le premier rail de guidage (18, 28, 38) et le deuxième rail de guidage (19, 29, 39) ; et
comprenant un élément élastique (22, 32, 42) disposé entre le premier rail de guidage (18, 28, 38) et la partie de réception (16, 26, 36) de l'arbre profilé (14) et entre le deuxième rail de guidage (19, 29, 39) et la partie de réception (16, 26, 36) de l'arbre profilé (14), dans lequel l'élément élastique (22, 32, 42) est disposé au moins partiellement dans un premier évidement (16a, 26a, 36a) et un deuxième évidement (16b, 26b, 36b) formés dans la partie de réception (16, 26, 36) de l'arbre profilé (14) et au moins partiellement dans un évidement (18a, 28a, 38a) formé dans le premier rail de guidage (18, 28, 38) et dans un évidement (19a, 29a, 39a) formé dans le deuxième rail de guidage (19, 29, 39) et est conçu pour soumettre l'agencement de guidage (15, 25, 35) respectif à une précontrainte, **caractérisé en ce que**
le premier rail de guidage (18, 28, 38) est disposé suivant une relation par rapport à la partie de réception (16, 26, 36) de l'arbre profilé (14) telle que l'évidement (18a, 28a, 38a) formé dans le premier rail de guidage (18, 28, 38) et destiné à la réception de l'élément élastique (22, 32, 42) est disposé de manière décalée d'une distance prédéfinie par rapport au premier évidement (16a, 26a, 36a) formé dans la partie de réception (16, 26, 36) de l'arbre profilé (14) et destiné à la réception de l'élément élastique (22, 32, 42) ;
le deuxième rail de guidage (19, 29, 39) étant disposé suivant une relation par rapport à la partie de réception (16, 26, 36) de l'arbre profilé (14) telle que l'évidement (19a, 29a, 39a) formé dans le deuxième rail de guidage (19, 29, 39) et destiné à la réception de l'élément élastique (22, 32, 42) est disposé de manière décalée d'une distance prédéfinie par rapport au deuxième évidement (16b, 26b, 36b) formé dans la partie de réception (16, 26, 36) de l'arbre profilé (14) et destiné à la réception de l'élément élastique (22, 32, 42) ;
l'élément élastique (22, 32, 42) étant soumis à un cisaillement dans le sens de la largeur pour la compensation du jeu de l'agencement de guidage (15, 25, 35).

2. Arbre intermédiaire de direction selon la revendication 1, **caractérisé en ce que** la partie de réception (16, 26, 36) de l'arbre profilé (14), le premier rail de guidage (18, 28, 38) et le deuxième rail de guidage (19, 29, 39) sont de forme arquée de telle sorte qu'une forme arquée du premier rail de guidage (18, 28, 38) et du deuxième rail de guidage (19, 29, 39) est adaptée sensiblement à une forme arquée de la partie de réception (16, 26, 36) de l'arbre profilé (14).

3. Arbre intermédiaire de direction selon la revendication 1 ou 2, **caractérisé en ce qu'**une surface (18b, 28b, 38b) du premier rail de guidage (18, 28, 38) disposée en regard de la partie de réception (16, 26, 36) de l'arbre profilé (14) présente, au moins dans certaines régions, une courbure de manière adjacente à l'évidement (18a, 28a, 38a) formé dans le premier rail de guidage (18, 28, 38) et destiné à la réception de l'élément élastique (22, 32, 42), laquelle courbure est supérieure à une courbure d'une surface (16c, 26c, 36c) de la partie de réception (16, 26, 36) de l'arbre profilé (14), et une surface du deuxième rail de guidage (19, 29, 39) disposée en regard de la partie de réception (16, 26, 36) de l'arbre profilé (14) présente, au moins dans certaines régions, une courbure de manière adjacente à l'évidement (19a, 29a, 39a) formé dans le deuxième rail de guidage (19, 29, 39) et destiné à la réception de l'élément élastique (22, 32, 42), laquelle courbure est supérieure à une courbure de la surface (16c, 26c, 36c) de la partie de réception (16, 26, 36) de l'arbre profilé (14).

4. Arbre intermédiaire de direction selon la revendication 3, **caractérisé en ce que** le premier rail de guidage (18, 28, 38) et le deuxième rail de guidage (19, 29, 39) sont montés rotatifs autour de la surface (16c, 26c, 36c) de la partie de réception (16, 26, 36) de l'arbre profilé (14).

5. Arbre intermédiaire de direction selon l'une des revendications précédentes, **caractérisé en ce que** la pluralité de billes (20, 30, 40) sont disposées dans une cage à billes (23, 33), laquelle comporte une pluralité de dispositifs de réception (50, 51, 52, 53, 54, 55) de forme sensiblement cylindrique creuse destinés à la réception des billes (20, 30, 40), un dispositif de réception (50, 51, 52, 53, 54, 55) comprenant respectivement deux éléments de réception (50a, 50b, 51a, 51b, 52a, 52b, 53a, 53b, 54a, 54b, 55a, 55b) semi-cylindriques disposés de manière espacée l'un de l'autre dans la direction axiale du dispositif de réception (50, 51, 52, 53, 54, 55), lesquels éléments de réception sont biseautés dans une région d'insertion (50c, 51c, 52c, 53c, 54c, 55c) pour l'insertion des billes (20, 30, 40).

6. Arbre intermédiaire de direction selon la revendication 5, **caractérisé en ce que** les éléments de réception (50a, 50b, 51a, 51b, 52a, 52b, 53a, 53b, 54a, 54b, 55a, 55b) semi-cylindriques sont espacés les uns des autres dans la direction axiale de telle sorte qu'une distance entre respectivement deux éléments de réception (50a, 50b, 51a, 51b, 52a, 52b, 53a, 53b, 54a, 54b, 55a, 55b) du dispositif de réception (50, 51, 52, 53, 54, 55) dans la région d'insertion (50c, 51c, 52c, 53c, 54c, 55c) pour l'insertion des billes (20, 30, 40) est inférieure à un diamètre (D) d'une bille (20, 30, 40) respective.

7. Arbre intermédiaire de direction selon la revendication 5 ou 6, **caractérisé en ce que** la pluralité de dispositifs de réception (50, 51, 52, 53, 54, 55) de forme sensiblement cylindrique creuse sont reliés à une partie de fond (23a, 33a) de la cage à billes (23, 33) par une bande formée dans la direction axiale de la cage à billes (23, 33), les éléments de réception (50a, 50b, 51a, 51b, 52a, 52b, 53a, 53b, 54a, 54b, 55a, 55b) étant flexibles dans la direction axiale de la cage à billes (23, 33) par rapport à la bande formée sur la partie de fond (23a, 33a) de la cage à billes (23, 33).

8. Arbre intermédiaire de direction selon l'une des revendications 5 à 7, **caractérisé en ce qu'**une butée axiale de fin de course de la cage à billes (23, 33) est formée par des bagues de délimitation (7a, 7b) disposées sur l'arbre profilé (14) au niveau de parties d'extrémité axiales (23b, 23c, 33b, 33c) de la cage à billes (23, 33), les bagues de délimitation (7a, 7b) étant fixées à l'arbre profilé (14) respectivement au moyen d'une bague de fixation (8a, 8b).

9. Arbre intermédiaire de direction selon l'une des revendications précédentes, **caractérisé en ce que** l'arbre creux intérieur (12) et l'arbre profilé (14) comprennent, dans une région de chevauchement, des parties (12a, 14a) disposées respectivement de manière adjacente les unes aux autres et de forme concave dans la direction périphérique, la partie (12a) de forme concave de l'arbre creux intérieur (12) étant en prise avec la partie (14a) de forme concave de l'arbre profilé (14) pour la fixation axiale de l'arbre profilé (14) à l'arbre creux intérieur (12).
